# EUROPEAN PATENT SPECIFICATION

(11) **EP 3 916 895 B1**
(45) Date of publication and mention of the grant of the patent: **17.07.2024**
(21) Application number: 20887902.3
(22) Date of filing: 30.09.2020
(51) Int. Cl.: H01M 50/20, H01M 50/209, H01M 50/249, H01M 50/258, H01M 50/264, H01M 50/507

(54) **ISOLATION PLATE, BATTERY MODULE, BATTERY PACK, AND APPARATUS**
ISOLIERPLATTE, BATTERIEMODUL, BATTERIEPACK UND VORRICHTUNG
PLAQUE D'ISOLATION, MODULE DE BATTERIE, BLOC-BATTERIE, ET APPAREIL

(30) Priority: 15.11.2019 CN 201921973135 U
(43) Date of publication of application: 01.12.2021
(73) Proprietor: Contemporary Amperex Technology Co., Limited, Ningde, Fujian 352100 (CN)
(72) Inventor: HOU, Yujia, Ningde, Fujian 352100 (CN)
(74) Representative: Pfenning, Meinig & Partner mbB
(86) International application number: PCT/CN2020/119718
(87) International publication number: WO 2021/093488

(56) References cited:
- CN-A- 104 752 649
- CN-A- 105 226 213
- CN-A- 105 845 854
- CN-U- 205 303 534
- CN-U- 208 256 770
- CN-U- 208 570 713
- CN-U- 211 017 166
- US-A1- 2018 006 282
- US-A1- 2018 108 888

## Description

### TECHNICAL FIELD

This application relates to the technical field of power batteries, and in particular, to a partition plate, a battery module, a battery pack, and a device using the battery module as a power supply.

### BACKGROUND

With diversification of battery modules, conventional product development methods lead to increase of parts and make materials increasingly uncontrollable. Products of the battery modules have a variety of systems and sizes, and have different structures depending on the quantity of battery cells and the mode of serial/parallel connection. Consequently, partition plates insulatively connected to the battery cells vary in size. If a mold is specially developed for each type of partition plate, costs of mold development and material management will increase greatly.

CN104752649B provides a dividing plate for power battery module, including a clapboard body, left cover and right cover plate. The clapboard body has leading flank and trailing flank relative to each other, and the leading flank is provided with preceding battery holding tank, and the left cover is set in the left end of the clapboard body, the right cover plate is located at the right hand member of the clapboard body, and at the end of each dividing plate portion is correspondingly arranged a left cover and a right cover plate.

US2018/108888A1 provides a battery module. The battery module comprises: a plurality of mono-batteries arranged along an arrangement direction; and a frame receiving and fixing the plurality of mono-batteries. The battery module further comprises a plurality of isolating plates, each isolating plate is interposed between two adjacent mono-batteries, each isolating plate is provided with a through hole penetrating along the arrangement direction. Each isolating plate is configured to be capable of self-foaming to make a volume of each isolating plate expanded when each isolating plate is heated and a temperature of each isolating plate is more than 2000 C. CN208256770U provides a battery module comprising a plurality of battery sequences, a first end plate, a second end plate and a partition. Each battery sequence includes a plurality of batteries arranged in a longitudinal direction, and the plurality of battery sequences are sequentially arranged in a lateral direction; a first end plate and a second end plate are respectively located at two ends of the plurality of battery sequences in the longitudinal direction. The first end plate has a passage. The partition plate is disposed between the adjacent two battery sequences, and the partition plate is fixed to the second end plate at one end of the longitudinal direction, and the partition plate is longitudinally extends into the channel and is fixed to the first end plate. In the passage, the partition has a bent portion which is not parallel to the longitudinal direction.

### SUMMARY

An objective of this application is to provide a partition plate, a battery module, a battery pack, and a device using the battery module as a power supply. The partition plate can be arbitrarily formed into a desired size by splicing according to the quantity of battery cells of the battery module.

To fulfill the foregoing objective, this application discloses a partition plate. The partition plate is applied to a battery module. The partition plate includes: a first assembling piece, configured to overlay one battery cell of the battery module, where the first assembling piece includes a first body portion and a first connecting portion disposed around the first body portion; and a second assembling piece, disposed alongside the first assembling piece, and configured to overlay another battery cell of the battery module, where the second assembling piece includes a second body portion and a second connecting portion disposed around the second body portion. The first assembling piece and the second assembling piece are spliced to each other through coordination between the first connecting portion and the second connecting portion. A surface facing away from the battery cell of the partition plate is provided with a channel for accommodating a sampling member.

Therefore, the first assembling piece and the second assembling piece can be arbitrarily spliced into a desired partition plate according to the quantity of battery cells of the battery module. An overall structure of the partition plate is simple, and the partition plate is easy to assemble and disassemble, thereby saving costs of mold preparation and facilitating material management.

According to an aspect of this application, the first connecting portion includes two first splicing portions disposed opposite to each other in a width direction of the first body portion. A first bulge is disposed on one of the first splicing portions, and a first recess is disposed on the other of the first splicing portions. The second connecting portion includes two second splicing portions disposed opposite to each other in a width direction of the second body portion. A second bulge is disposed on one of the second splicing portions, and a second recess is disposed on the other of the second splicing portions. The first bulge is able to be inserted into the second recess, or the second bulge is able to be inserted into the first recess, so that the first assembling piece and the second assembling piece are spliced to each other.

According to an aspect of this application, the first bulge is a cylinder extending outward from the first splicing portion in the width direction of the first body portion, and the second recess is a hole that matches the first bulge. The second bulge is a cylinder extending outward from the second splicing portion in the width direction of the second body portion, and the first recess is a hole that matches the second bulge. According to an aspect of this application, the first recess is a notch opened in a thickness direction of the first body portion, and the second bulge is a clamping stud that fits with the first recess. The second recess is a notch opened in a thickness direction of the second body portion, and the first bulge is a clamping stud that fits with the second recess.

According to an aspect of this application, two positioning holes spaced apart are disposed on the first body portion and the second body portion in a length direction of the first body portion and the second body portion respectively. The two positioning holes are configured to accommodate a positive electrode post and a negative electrode post of the battery cell respectively.

According to an aspect of this application, the first connecting portion further includes a first isolation portion disposed around each positioning hole, and the two first isolation portions are distributed diagonally with respect to the first body portion. The second connecting portion further includes a second isolation portion disposed around each positioning hole, and the two second isolation portions are distributed diagonally with respect to the second body portion. In the first assembling piece and the second assembling piece disposed alongside, a first spacing and a second spacing are formed between the first splicing portion and the two first isolation portions respectively, and a third spacing and a fourth spacing are formed between the second splicing portion and the two second isolation portions respectively. The first spacing, the second spacing, the third spacing, and the fourth spacing form a communicating channel between each other. The first isolation portion and the second isolation portion can prevent a short circuit of the battery cells caused by a too short creepage distance or a too small electrical gap.

According to an aspect of this application, the first bulge is disposed on one side of the first isolation portion, the side being located in the width direction of the first body portion. The first recess is disposed on the other side located in the width direction of the first body portion. The second bulge is disposed on one side of the second isolation portion, the side being located in the width direction of the second body portion. The second recess is disposed on the other side located in the width direction of the second body portion.

According to an aspect of this application, the first connecting portion further includes a first blocking portion disposed between the first isolation portion and one of the first splicing portions. The second connecting portion further includes a second blocking portion disposed between the second isolation portion and one of the second splicing portions. In the first assembling piece and the second assembling piece disposed alongside, the first blocking portion is flush with the second blocking portion.

According to an aspect of this application, the first assembling piece or the second assembling piece is configured to overlay at least two battery cells of the battery module. According to another aspect, an embodiment of this application further provides a battery module, including: a frame, containing an accommodation cavity; at least two battery cells, accommodated in the accommodation cavity; the partition plate described above, where the first assembling piece and the second assembling piece of the partition plate overlay the battery cells respectively; and an electrode connecting plate, disposed on the partition plate, where the at least two battery cells are electrically connected through the electrode connecting plate.

According to another aspect, this application further discloses a battery pack. The battery pack includes the battery module described above.

According to another aspect, this application further discloses a device that uses a battery module as a power supply. The battery module is the battery module described above.

With the partition plate, the battery module, and the battery pack disclosed in this application, the first assembling piece and the second assembling piece can be arbitrarily spliced into a desired partition plate according to the quantity of battery cells of the battery module. The overall structure of the partition plate is simple, and the partition plate is easy to assemble and disassemble, thereby saving costs of mold preparation and facilitating material management.

### BRIEF DESCRIPTION OF DRAWINGS

To describe the technical solutions in the embodiments of this application more clearly, the following outlines the drawings to be used in the description of the embodiments of this application. Apparently, the drawings outlined below are merely some embodiments of this application, and a person of ordinary skill in the art may derive other drawings from the outlined drawings without making any creative efforts.

The following describes features, advantages, and technical effects of exemplary embodiments of this application with reference to accompanying drawings. In the drawings, the same parts use the same reference numerals. The drawings are not drawn to scale.
FIG. 1 is a schematic structural diagram of a vehicle according to an embodiment of this application;
FIG. 2 is a schematic structural diagram of a battery pack according to an embodiment of this application;
FIG. 3 is a schematic structural diagram of a battery module according to an embodiment of this application;
FIG. 4 is a schematic structural exploded view of the battery module shown in FIG. 3;
FIG. 5 is a schematic structural diagram of a partition plate according to an embodiment of this application;
FIG. 6 is schematic structural diagram of a first assembling piece in the partition plate shown in FIG. 5;
FIG. 7 is schematic structural diagram of a second assembling piece in the partition plate shown in FIG. 5; and
FIG. 8 is a schematic structural diagram of another first assembling piece or second assembling piece in the partition plate shown in FIG. 5.

### Reference numerals:

100-Vehicle;
20-Battery pack;
10: Battery module;
1-Partition plate;
11-First assembling piece; A1-First body portion; B 1-First connecting portion; 11a-First splicing portion; 11b-First isolation portion; 11c-First blocking portion; a-Bulge; b-Recess; 112-Positioning hole; L1-First spacing; L2-Second spacing;
12-Second assembling piece; A2-Second body portion; B2-Second connecting portion; 12a-Second splicing portion; 12b-Second isolation portion; 12c-Second blocking portion; L3-Third spacing; L4- Fourth spacing;
2-Frame; 21-End plate; 22-Hoop;
3-Battery cell;
4-Electrode connecting plate; 41-First connecting plate; 42-Second connecting plate; and
5-Sampling member.

### DETAILED DESCRIPTION OF EMBODIMENTS

The following describes features and exemplary embodiments in detail according to each aspect of this application. In the following detailed description, many details are provided to enable a comprehensive understanding of this application. However, it is apparent to a person skilled in the art that this application can be implemented without some of the details. The following description of the embodiments is merely intended to enable a better understanding of this application by illustrating examples of this application. In the drawings and the following description, at least a part of well-known structures and technologies are omitted to avoid unnecessary ambiguity of this application and, for clarity, the size of local structures may be exaggerated. In addition, the features, structures, or characteristics described below may be combined in one or more embodiments in any appropriate manner.

The directional terms appearing in the following description indicate the directions shown in the drawings, but are not intended to limit specific structures in this application. In the context of this application, unless otherwise expressly specified, the terms "mount" and "connect" shall be understood in a broad sense. For example, a "connection" may be a fixed connection, a detachable connection, or an integrated connection, and may be a direct connection or an indirect connection. A person of ordinary skill in the art can understand the specific meanings of the terms in this application according to specific situations.

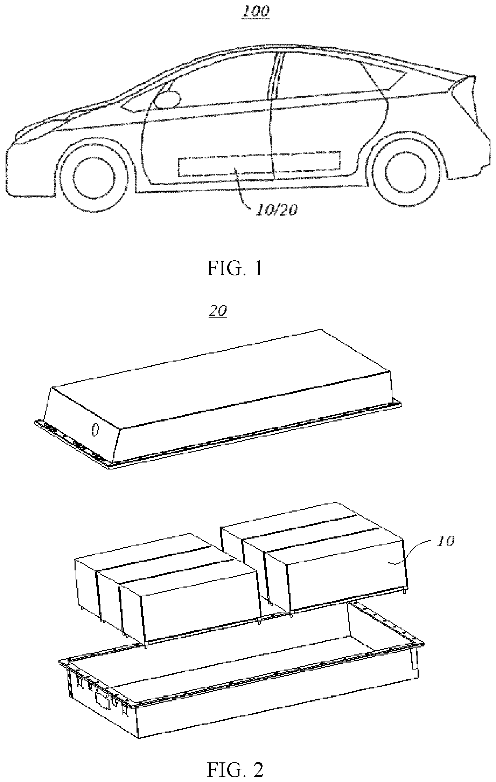

For a better understanding of this application, the following describes in detail a partition plate, a battery module, a battery pack, and a device using the battery module as a power supply according to an embodiment of this application with reference to FIG. 1 to FIG. 8.

An embodiment of this application provides a device using a battery module as a power supply. The device may be, for example, but is not limited to, a vehicle, a ship, or an aircraft.

Referring to FIG. 1, an embodiment of this application provides a vehicle 100, including a vehicle body and a battery. The battery is disposed in the vehicle body. The vehicle 100 may be a pure electric vehicle, or a hybrid electric vehicle or a range-extended electric vehicle. A driving motor electrically connected to the battery is disposed in the vehicle body. The battery provides electrical energy to the driving motor. The driving motor is connected to wheels of the vehicle body through a transmission mechanism to drive the vehicle to run. In some embodiments, the battery module may be horizontally disposed at a bottom of the vehicle body.

Referring to FIG. 2, the battery may be a battery pack 20. The battery pack 20 may be disposed in diverse ways. In some embodiments, the battery pack 20 includes a box body and a battery module 10 disposed in the box body. The quantity of battery modules 10 is one or more. One or more battery modules 10 are arranged in the box body. The type of the box body is not limited. The box body may be a frame shape, a disk shape, a box shape, or the like. In some embodiments, the box body may contain a lower box configured to accommodate the battery module 10 and an upper box snap-fitted to the lower box. Understandably, the battery may also be the battery module 10. That is, the battery module 10 is directly disposed in the vehicle body.

The battery module 10 includes at least two battery cells 3. The battery module 10 may be disposed in diverse ways. In an embodiment, the battery module 10 includes an accommodation cavity and at least two battery cells 3 located in the accommodation cavity. The at least two battery cells 3 are disposed alongside in the accommodation cavity.

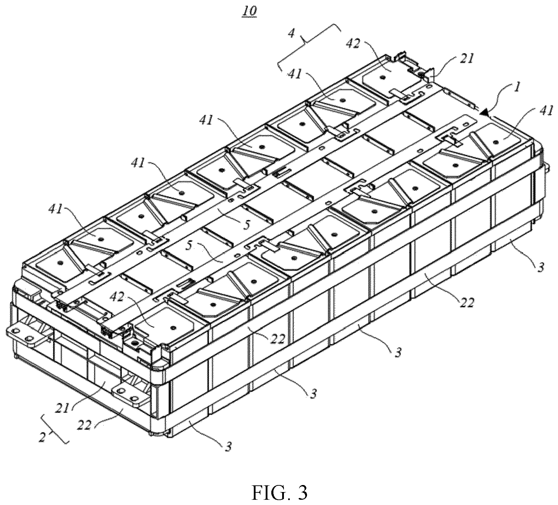

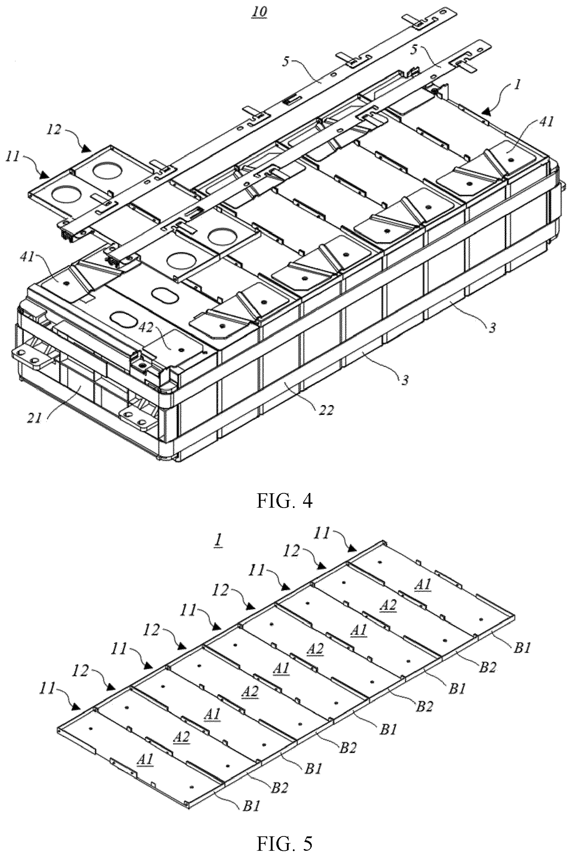

Referring to FIG. 3 and FIG. 4, a battery module 10 according to an embodiment of this application includes: a partition plate 1, a frame 2, at least two battery cells 3, and an electrode connecting plate 4.

The frame 2 contains an accommodation cavity, and the at least two battery cells 3 are accommodated in the accommodation cavity. The partition plate 1 is configured to overlay the battery cells 3. The frame 2 is disposed in diverse ways. For example, the frame 2 includes a pair of end plates 21 and a hoop 22 that form the accommodation cavity. The pair of end plates 21 are disposed at two ends of at least two battery cells 3, and the pair of end plates 21 are connected to the partition plate 1. The hoop 22 is disposed around the pair of end plates 21 and at least two battery cells 3. For example, the frame 2 includes a pair of end plates 21 and side plates (not shown in the drawing) that form the accommodation cavity. The pair of end plates 21 are disposed at two ends of at least two battery cells 3, and the pair of end plates 21 are connected to the partition plate 1. For another example, the frame 2 includes a housing and a cover plate that covers the housing. The partition plate 1 is connected to the cover plate.

The electrode connecting plate 4 is disposed on the partition plate 1. The at least two battery cells 3 are electrically connected through the electrode connecting plate 4. The electrode connecting plate 4 includes a first connecting plate 41 and a second connecting plate 42. The first connecting plate 41 is electrically connected to two adjacent battery cells 3 among the at least two battery cells 3 arranged alongside. The second connecting plate 42 is electrically connected to a headmost or endmost battery cell 3 among the at least two battery cells 3 arranged alongside. The positive electrode post or negative electrode post of each battery cell 3 is welded to the electrode connecting plate 4 after passing through the partition plate 1, so as to implement electrical connection of the at least two battery cells 3.

Depending on power requirements of the battery module 10, the battery module 10 may be classed into structures that come in diverse series and diverse sizes. The quantity of battery cells 3 varies between different series of battery modules 10. The structures of the partition plates 1 also vary with the quantity of the battery cells 3. To reduce the cost of mold development for the partition plate 1, the partition plate 1 according to an embodiment of this application may be made by splicing a plurality of parts.

As shown in FIG. 5, the partition plate 1 according to this embodiment of this application includes: a first assembling piece 11 and a second assembling piece 12. The first assembling piece 11 is configured to overlay one battery cell 3 of the battery module 10. The first assembling piece 11 includes a first body portion A1 and a first connecting portion B1 disposed around the first body portion A1.

The second assembling piece 12 is disposed alongside the first assembling piece 11, and is configured to overlay another battery cell 3 of the battery module 10. The second assembling piece 12 includes a second body portion A2 and a second connecting portion B2 disposed around the second body portion A2.

The first assembling piece 11 and the second assembling piece 12 are spliced to each other through coordination between the first connecting portion B1 and the second connecting portion B2.

The first assembling piece 11 and the second assembling piece 12 are made of a plastic material, and can mass-produced by injection molding. Depending on the quantity of the battery cells 3 of the battery module 10, a plurality of first assembling pieces 11 and a plurality of second assembling pieces 12 may be spliced into a partition plate 1 of any size. Merely the molds of the first assembling piece 11 and the plurality of second assembling piece 12 need to be developed. It is not necessary to develop different molds according to the partition plates of different sizes, thereby reducing mold development costs and facilitating material management.

With the partition plate 1 according to this embodiment of this application, the first assembling piece 11 and the second assembling piece 12 can be arbitrarily spliced into a partition plate of a desired size according to the quantity of battery cells of the battery module 10. The overall structure of the partition plate is simple, and the partition plate is easy to assemble and disassemble, thereby saving costs of mold preparation and facilitating material management.

The specific structure of the partition plate 1 according to this embodiment of this application is described in further detail below with reference to drawings.

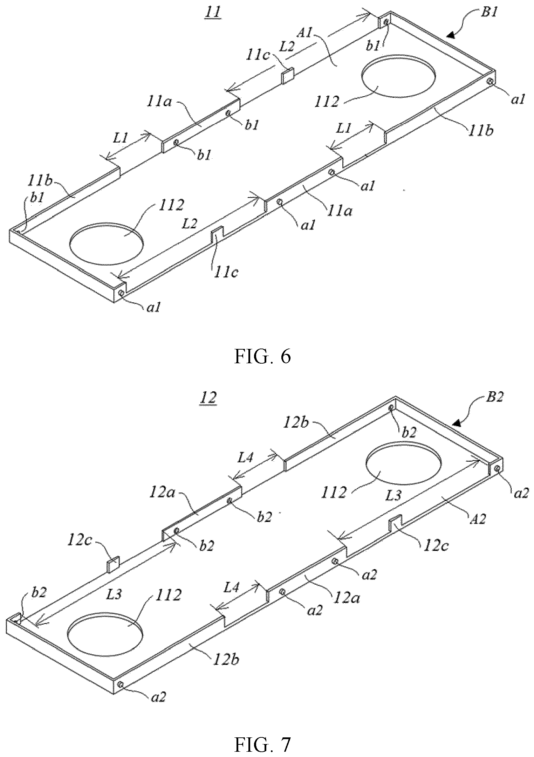

Referring to FIG. 6 and FIG 7, the first connecting portion B1 of the first assembling piece 11 includes two first splicing portions 11a disposed opposite to each other in a width direction of the first body portion A1. A first bulge a1 is disposed on one of the first splicing portions 11a, and a first recess b1 is disposed on the other of the first splicing portions 11a.

The second connecting portion B2 of the second assembling piece 12 includes two second splicing portions 12a disposed opposite to each other in a width direction of the second body portion A2. A second bulge a2 is disposed on one of the second splicing portions 12a, and a second recess b2 is disposed on the other of the second splicing portions 12a.

The first bulge a1 is able to be inserted into the second recess b2, or the second bulge a2 is able to be inserted into the first recess b1, so that the first assembling piece 11 and the second assembling piece 12 are spliced to each other.

In some embodiments, the first bulge a1 is a cylinder extending outward from the first splicing portion 11a in the width direction of the first body portion A1, and the second recess b2 is a hole that matches the first bulge a1. The second bulge a2 is a cylinder extending outward from the second splicing portion 12a in the width direction of the second body portion A2, and the first recess b1 is a hole that matches the second bulge a2. In some embodiments, the cylinder and the hole can be matched with each other by interference fit. The cylinder and the hole are inserted into each other in a direction in which the first assembling piece 11 and the second assembling piece 12 are disposed alongside, so as to implement the splicing between the first assembling piece 11 and the second assembling piece 12.

The shape of the cylinder may be a cylindrical rod, a tapered rod or a cubic rod. The shape of the hole may be a circular hole or a cubic hole that fits with the cylinder. In some embodiments, the first bulge a1 and the second bulge a2 are cylindrical rods, and the first recess b1 and the second recess b2 are circular holes, as shown in FIG. 6 and FIG. 7.

In some embodiments, the first recess b1 is a notch opened in a thickness direction of the first body portion A1, and the second bulge a2 is a clamping stud that fits with the first recess b1. The second recess b2 is a notch opened in a thickness direction of the second body portion A2, and the first bulge a1 is a clamping stud that fits with the second recess b2. In some embodiments, the clamping stud and the notch can be matched with each other by interference fit. The clamping stud and the notch are inserted into each other in a direction perpendicular to the direction in which the first assembling piece 11 and the second assembling piece 12 are disposed alongside, so as to implement the splicing between the first assembling piece 11 and the second assembling piece 12.

The shape of the notch may be a rectangular notch with an opening, and the shape of the clamping stud may be a rectangular clamping stud that fits with the notch. The shape of the notch may also be a tapered notch with an opening. The shape of the clamping stud may be a tapered clamping stud that fits with the notch, so as to facilitate a close fit in an insertion process. In some embodiments, the first bulge a1 and the second bulge a2 are rectangular clamping studs, and the first recess b1 and the second recess b2 are rectangular notches, so as to facilitate manufacturing.

In some embodiments, two positioning holes 112 spaced apart are disposed on the first body portion A1 and the second body portion A2 in a length direction of the first body portion and the second body portion respectively. The two positioning holes 112 are configured to accommodate a positive electrode post and a negative electrode post of the battery cell 3 respectively. In some embodiments, the first body portion A1 and the second body portion A2 are rectangular plates, so as to simplify the structures of the first assembling piece 11 and the second assembling piece 12.

The first connecting portion B1 further includes a first isolation portion 11b disposed around each positioning hole 112. The two first isolation portions 11b are distributed diagonally with respect to the first body portion A1. The first isolation portion 11b is primarily configured to isolate adjacent electrode connecting plates 4 in the battery module 10, and prevent a short circuit of the battery cells 3 caused by a too short creepage distance or a too small electrical gap.

The second connecting portion B2 further includes a second isolation portion 12b disposed around each positioning hole 112. The two second isolation portions 12b are distributed diagonally with respect to the second body portion A2. The second isolation portions 12b are primarily configured to isolate adjacent electrode connecting plates 4 in the battery module 10, and prevent a short circuit of the battery cells 3 caused by a too short creepage distance or a too small electrical gap.

In the first assembling piece 11 and the second assembling piece 12 disposed alongside, a first spacing L1 and a second spacing L2 are formed between the first splicing portion 11a and the two first isolation portions 11b respectively. A third spacing L3 and a fourth spacing L4 are formed between the second splicing portion 12a and the two second isolation portions 12b respectively. The first spacing L1, the second spacing L2, the third spacing L3, and the fourth spacing L4 form a communicating channel between each other. The channel is configured to accommodate a sampling member 5 and guide and constrain the sampling member 5 to implement electrical isolation between the sampling members 5.

As shown in FIG. 4, the battery module 10 in this embodiment further includes a sampling member 5. The sampling member 5 may be either a flexible circuit board or a wire harness. The partition plate 1 forms two channels. In some embodiments, one of the channels can accommodate a type of sampling member 5, such as a flexible circuit board, and the other channel can accommodate another type of sampling member 5 such as a wire harness. In some embodiments, both channels may accommodate the flexible circuit board or accommodate the wire harness.

To prevent loosening of the splicing between the first assembling piece 11 and the second assembling piece 12, in some embodiments, the first bulge a1 is disposed on one side of the first isolation portion 11b, the side being located in the width direction of the first body portion A1. The first recess b1 is disposed on the other side located in the width direction of the first body portion A1. The second bulge a2 is disposed on one side of the second isolation portion 12b, the side being located in the width direction of the second body portion A2. The second recess b2 is disposed on the other side located in the width direction of the second body portion A2. The first bulge a1 is able to be inserted into the second recess b2, or the second bulge a2 is able to be inserted into the first recess b 1, so that the first assembling piece 11 and the second assembling piece 12 are spliced to each other. The structures of the first bulge a1, the first recess b1, the second bulge a2, and the second recess b2 are as described above and omitted here.

In some embodiments, in the first assembling piece 11 and the second assembling piece 12 disposed alongside, the bulge a or the recess b may be disposed on an identical side of both the first splicing portion 11a and the first isolation portion 11b of the first connecting portion B1; or, the bulge a is disposed on a side of the first splicing portion 11a, and the recess b is disposed on an identical side of the first isolation portion 11b and the first splicing portion 11a; or, the recess b is disposed on a side of the first splicing portion 11a, and the bulge a is disposed on an identical side of the first isolation portion 11b and the first splicing portion 11a.

Similarly, the bulge a or the recess b may be disposed on an identical side of both the second splicing portion 12a and the second isolation portion 12b of the second connecting portion B2; or, the bulge a is disposed on a side of the second splicing portion 12a, and the recess b is disposed on an identical side of the second isolation portion 12b and the second splicing portion 12a; or, the recess b is disposed on a side of the second splicing portion 12a, and the bulge a is disposed on an identical side of the second isolation portion 12b and the second splicing portion 12a, as long as the first isolation portion 11b and the second isolation portion 12b can be spliced to each other. In some embodiments, the first connecting portion B1 further includes a first blocking portion 11c disposed between the first isolation portion 11b and one of the first splicing portions 11a. The second connecting portion B2 further includes a second blocking portion 12c disposed between the second isolation portion 12b and one of the second splicing portions 12a. In the first assembling piece 11 and the second assembling piece 12 disposed alongside, the first blocking portion 11c is flush with the second blocking portion 12c.

In the channel configured to accommodate the sampling member 5 as described above, the second spacing L2 formed between the first splicing portion 11a and one of the first isolation portions 11b is divided into two sections by the first blocking portion 11c. One of the sections of spacing is flush with the first spacing L1 to form a part of the channel. The third spacing L3 formed between the second splicing portion 12a and one of the second isolation portions 12b is divided into two sections by the second blocking portion 12c. One of the sections of spacing is flush with the fourth spacing L4 to form a part of the channel. The sampling member 5 is placed in the channel isolated by the first blocking portion 11c and the second blocking portion 12c, and can prevent faults such as a short circuit caused by contact between the sampling member 5 and an electrode post of the battery cell 3, where the electrode post passes through the positioning hole 112.

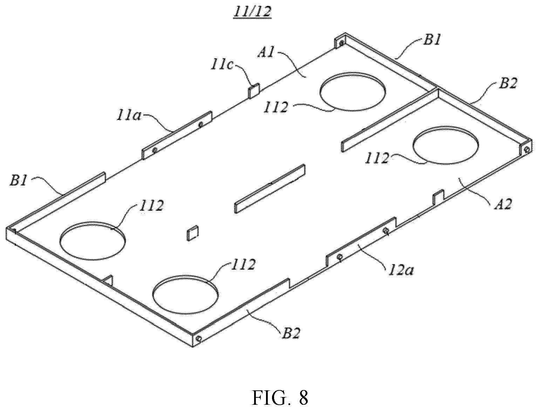

Referring to FIG. 8, an embodiment of this application further provides another first assembling piece 11 or second assembling piece 12 configured to overlay at least two battery cells 3 of the battery module 10. The first assembling piece 11 or the second assembling piece 12 may be regarded as a structure integrally formed by disposing the foregoing first assembling piece 11 and the foregoing second assembling piece 12 alongside alternately.

In some embodiments, the first assembling piece 11 or the second assembling piece 12 is a structure integrally formed by disposing alongside one first assembling piece 11 shown in FIG. 6 and one second assembling piece 12 shown in FIG. 7, and is configured to overlay two battery cells 3 of the battery module 10. When the battery module 10 contains relatively many battery cells 3, the first assembling piece 11 or the second assembling piece 12 can reduce splicing steps and speed up the assembly efficiency of the partition plate 1.

In some embodiments, the first assembling piece 11 or the second assembling piece 12 is a structure integrally formed by disposing alongside alternately a plurality of first assembling pieces 11 shown in FIG. 6 and a plurality of second assembling pieces 12 shown in FIG. 7, and is configured to overlay a plurality of battery cells 3 of the battery module 10. The quantity of the first assembling pieces 11 and the second assembling pieces 12 disposed alongside alternately is not too large, so as to reduce mold development costs and material management costs.

For example, the battery module 10 includes 9 battery cells 3. The partition plate 1 may be formed by splicing alternately 5 first assembling pieces 11 shown in FIG. 6 and 4 second assembling pieces 12 shown in FIG. 7, or may be formed by splicing the following structures in specified order: 3 first assembling pieces 11 shown in FIG. 6, 2 second assembling pieces 12 shown in FIG. 7, and 2 structures shown in FIG. 8.

As mentioned above, the partition plate 1 may be formed by splicing according to the quantity of battery cells 3 in the battery module 10. It is assumed that the battery module 10 includes N battery cells 3. One of the first electrode connecting plates 41 is electrically connected to a negative electrode post of an i^{th} battery cell 3 and a positive electrode post of an (i+1)^{th} battery cell 3, and the other first electrode connecting plate 41 is electrically connected to a negative electrode post of an (i+1)^{th} battery cell 3 and a positive electrode post of an (i+2)^{th} battery cell 3. The second connecting plate 42 is electrically connected to a positive electrode post of a 1^{st} battery cell 3 and a negative electrode post of an N^{th} battery cell, where 1 ≤ i < N, and N is an integer greater than 1. In this way, a plurality of battery cells 3 are connected in series/parallel to form a complete battery module 10.

As shown in FIG. 3 and FIG. 4, the battery module 10 includes 9 battery cells. The partition plate 1 is formed by splicing 5 first assembling pieces 11 and 4 second assembling pieces 12 together. The 8 first electrode connecting plates 41 and the 2 second connecting plates 42 are arranged in two rows. From left to right, 4 first electrode connecting plates 41 in one of the rows are electrically connected to the negative electrode post of the i^{th} battery cell 3 and the positive electrode post of the (i+1)^{th} battery cell 3, and 4 first electrode connecting plate 41 in the other row are electrically connected to the negative electrode post of the (i+1)^{th} battery cell 3 and the positive electrode post of the (i+2)^{th} battery cell 3. The 2 second connecting plates 42 are electrically connected to the positive electrode post of the 1^{st} battery cell 3 and the negative electrode post of the 9^{th} battery cell, where 1 ≤ i < 9.

The battery module 10 according to this embodiment of this application adopts the partition plate 1 described above. A partition plate of a desired size can be formed by splicing arbitrarily according to the quantity of the battery cells 3, and the overall structure of the partition plate is simple, thereby saving costs of mold preparation and material management, and facilitating assembly and disassembly.

Although this application has been described with reference to exemplary embodiments, various improvements may be made to the embodiments without departing from the scope of this application, and the parts therein may be replaced with equivalents. Particularly, to the extent that no structural conflict exists, various technical features mentioned in various embodiments can be combined in any manner. This application is not limited to the specific embodiments disclosed herein, but includes all technical solutions falling within the scope of the claims.

## Claims

1. A partition plate (1) for a battery module (10), wherein the partition plate (1) comprises:
a first assembling piece (11), configured to overlay one battery cell (3) of the battery module (10), wherein the first assembling piece (11) comprises a first body portion (A1) and a first connecting portion (B1) disposed around the first body portion (A1); and
a second assembling piece (12), disposed alongside the first assembling piece (11), and configured to overlay another battery cell (3) of the battery module (10), wherein the second assembling piece (12) comprises a second body portion (A2) and a second connecting portion (B2) disposed around the second body portion (A2), wherein
the first assembling piece (11) and the second assembling piece (12) are spliced to each other through coordination between the first connecting portion (B 1) and the second connecting portion (B2); and
a surface facing away from the battery cell (3) of the partition plate (1) is provided with a channel for accommodating a sampling member (5).

2. The partition plate (1) according to claim 1, wherein the first connecting portion (B1) comprises two first splicing portions (11a) disposed opposite to each other in a width direction of the first body portion (A1), a first bulge (a1) is disposed on one of the first splicing portions (11a), and a first recess (b1) is disposed on the other of the first splicing portions (11a);
the second connecting portion (B2) comprises two second splicing portions (12a) disposed opposite to each other in a width direction of the second body portion (A2), a second bulge (a2) is disposed on one of the second splicing portions (12a), and a second recess (b2) is disposed on the other of the second splicing portions (12a); and
the first bulge (a1) is able to be inserted into the second recess (b2), or the second bulge (a2) is able to be inserted into the first recess (b1), so that the first assembling piece (11) and the second assembling piece (12) are spliced to each other.

3. The partition plate (1) according to claim 2, wherein the first bulge (a1) is a cylinder extending outward from the first splicing portion (11a) in the width direction of the first body portion (A1), and the second recess (b2) is a hole that matches the first bulge (a1); and
the second bulge (a2) is a cylinder extending outward from the second splicing portion (12a) in the width direction of the second body portion (A2), and the first recess (b1) is a hole that matches the second bulge (a2).

4. The partition plate (1) according to claim 2 or 3, wherein the first recess (b1) is a notch opened in a thickness direction of the first body portion (A1), and the second bulge (a2) is a clamping stud that fits with the first recess (b1); and
the second recess (b2) is a notch opened in a thickness direction of the second body portion (A2), and the first bulge (a1) is a clamping stud that fits with the second recess (b2).

5. The partition plate (1) according to any one of claims 2 to 4, wherein two positioning holes (112) spaced apart are disposed on the first body portion (A1) and the second body portion (A2) in a length direction of the first body portion and the second body portion respectively, and the two positioning holes (112) are configured to accommodate a positive electrode post and a negative electrode post of the battery cell (3) respectively.

6. The partition plate (1) according to claim 5, wherein the first connecting portion (B1) further comprises a first isolation portion (11b) disposed around each positioning hole (112), and the two first isolation portions (11b) are distributed diagonally with respect to the first body portion (A1);
the second connecting portion (B2) further comprises a second isolation portion (12b) disposed around each positioning hole (112), and the two second isolation portions (12b) are distributed diagonally with respect to the second body portion (A2); and
in the first assembling piece (11) and the second assembling piece (12) disposed alongside, a first spacing (L1) and a second spacing (L2) are formed between the first splicing portion (11a) and the two first isolation portions (11b) respectively, a third spacing (L3) and a fourth spacing (L4) are formed between the second splicing portion (12a) and the two second isolation portions (12b) respectively, and the first spacing (L1), the second spacing (L2), the third spacing (L3), and the fourth spacing (L4) form a communicating channel between each other.

7. The partition plate (1) according to claim 6, wherein the first bulge (a1) is disposed on one side of the first isolation portion (11b), the side being located in the width direction of the first body portion (A1); and the first recess (b1) is disposed on the other side located in the width direction of the first body portion (A1); and
the second bulge (a2) is disposed on one side of the second isolation portion (12b), the side being located in the width direction of the second body portion (A2); and the second recess (b2) is disposed on the other side located in the width direction of the second body portion (A2).

8. The partition plate (1) according to claim 6 or 7, wherein the first connecting portion (B1) further comprises a first blocking portion (11c) disposed between the first isolation portion (11b) and one of the first splicing portions (11a);
the second connecting portion (B2) further comprises a second blocking portion (12c) disposed between the second isolation portion (12b) and one of the second splicing portions (12a); and
in the first assembling piece (11) and the second assembling piece (12) disposed alongside, the first blocking portion (11c) is flush with the second blocking portion (12c).

9. The partition plate (1) according to any one of claims 1 to 8, wherein the first assembling piece (11) or the second assembling piece (12) is configured to overlay at least two battery cells (3) of the battery module (10).

10. A battery module (10), comprising:
a frame (2), containing an accommodation cavity;
at least two battery cells (3), accommodated in the accommodation cavity;
the partition plate (1) according to any one of claims 1 to 9, wherein the first assembling piece (11) and the second assembling piece (12) of the partition plate (1) overlay the battery cells (3) respectively; and
an electrode connecting plate (4), disposed on the partition plate (1), wherein the at least two battery cells (3) are electrically connected through the electrode connecting plate (4).

11. A battery pack (20), comprising the battery module (10) according to claim 10.

12. A device that uses a battery module as a power supply, wherein the battery module is the battery module (10) according to claim 10.

## Patentansprüche

1. Trennplatte (1) für ein Batteriemodul (10), wobei die Trennplatte (1) Folgendes umfasst:
ein erstes Montageteil (11), das dazu ausgelegt ist, eine Batteriezelle (3) des Batteriemoduls (10) zu überlagern, wobei das erste Montageteil (11) einen ersten Körperabschnitt (A1) und einen ersten Verbindungsabschnitt (B1), der um den ersten Körperabschnitt (A1) angeordnet ist, umfasst; und
ein zweites Montageteil (12), das neben dem ersten Montageteil (11) angeordnet und dazu ausgelegt ist, eine weitere Batteriezelle (3) des Batteriemoduls (10) zu überlagern, wobei das zweite Montageteil (12) einen zweiten Körperabschnitt (A2) und einen zweiten Verbindungsabschnitt (B2), der um den zweiten Körperabschnitt (A2) angeordnet ist, umfasst, wobei
das erste Montageteil (11) und das zweite Montageteil (12) durch die Koordinierung zwischen dem ersten Verbindungsabschnitt (B1) und dem zweiten Verbindungsabschnitt (B2) miteinander verspleißt sind; und
eine von der Batteriezelle (3) der Trennplatte (1) abgewandte Fläche mit einem Kanal zur Aufnahme eines Abtastelements (5) versehen ist.

2. Trennplatte (1) nach Anspruch 1, wobei der erste Verbindungsabschnitt (B1) zwei erste Spleißabschnitte (11a) umfasst, die in Breitenrichtung des ersten Körperabschnitts (A1) einander entgegengesetzt angeordnet sind, wobei eine erste Auswölbung (a1) an einem der ersten Spleißabschnitte (11a) angeordnet ist und eine erste Aussparung (b1) an dem anderen der ersten Spleißabschnitte (11a) angeordnet ist;
wobei der zweite Verbindungsabschnitt (B2) zwei zweite Spleißabschnitte (12a) umfasst, die in Breitenrichtung des zweiten Körperabschnitts (A2) einander entgegengesetzt angeordnet sind, wobei eine zweite Auswölbung (a2) an einem der zweiten Spleißabschnitte (12a) angeordnet ist und eine zweite Aussparung (b2) an dem anderen der zweiten Spleißabschnitte (12a) angeordnet ist; und
wobei die erste Auswölbung (a1) in die zweite Aussparung (b2) einsetzbar ist oder die zweite Auswölbung (a2) in die erste Aussparung (b1) einsetzbar ist, sodass das erste Montageteil (11) und das zweite Montageteil (12) miteinander verspleißt werden.

3. Trennplatte (1) nach Anspruch 2, wobei die erste Auswölbung (a1) ein Zylinder ist, der sich vom ersten Spleißabschnitt (11a) in Breitenrichtung des ersten Körperabschnitts (A1) nach außen erstreckt, und die zweite Aussparung (b2) eine zur ersten Auswölbung (a1) passende Bohrung ist und
wobei die zweite Auswölbung (a2) ein Zylinder ist, der sich vom zweiten Spleißabschnitt (12a) in Breitenrichtung des zweiten Körperabschnitts (A2) nach außen erstreckt, und die erste Aussparung (b1) eine zur zweiten Auswölbung (a2) passende Bohrung ist.

4. Trennplatte (1) nach Anspruch 2 oder 3, wobei die erste Aussparung (b1) eine Kerbe ist, die in Stärkenrichtung des ersten Körperabschnitts (A1) geöffnet ist, und die zweite Auswölbung (a2) ein zur ersten Aussparung (b1) passender Klemmzapfen ist und
wobei die zweite Aussparung (b2) eine Kerbe ist, die in Stärkenrichtung des zweiten Körperabschnitts (A2) geöffnet ist, und die erste Auswölbung (a1) ein zur zweiten Aussparung (b2) passender Klemmzapfen ist.

5. Trennplatte (1) nach einem der Ansprüche 2 bis 4, wobei zwei voneinander beabstandete Positionierungsbohrungen (112) am ersten Körperabschnitt (A) und am zweiten Körperabschnitt (A2) in Längsrichtung des ersten Körperabschnitts bzw. des zweiten Körperabschnitts angeordnet sind und die zwei Positionierungsbohrungen (112) dazu ausgelegt sind, einen positiven Elektrodenstift bzw. einen negativen Elektrodenstift der Batteriezelle (3) aufzunehmen.

6. Trennplatte (1) nach Anspruch 5, wobei der erste Verbindungsabschnitt (B1) ferner einen ersten Isolierabschnitt (11b) umfasst, der um jede Positionierungsbohrung (112) angeordnet ist, und die zwei ersten Isolierabschnitte (11b) in Bezug zum ersten Körperabschnitt (A1) diagonal verteilt sind;
wobei der zweite Verbindungsabschnitt (B2) ferner einen zweiten Isolierabschnitt (12b) umfasst, der um jede Positionierungsbohrung (112) angeordnet ist, und die zwei zweiten Isolierabschnitte (12b) in Bezug zum zweiten Körperabschnitt (A2) diagonal verteilt sind; und
das erste Montageteil (11) und das zweite Montageteil (12) nebeneinander angeordnet sind, ein erster Zwischenraum (L1) bzw. ein zweiter Zwischenraum (L2) zwischen dem ersten Spleißabschnitt (11a) und den zwei ersten Isolierabschnitten (11b) ausgebildet ist, ein dritter Zwischenraum (L3) bzw. ein vierter Zwischenraum (L4) zwischen dem zweiten Spleißabschnitt (12a) und den zwei zweiten Isolierabschnitten (11b) ausgebildet sind und der erste Zwischenraum (L1), der zweite Zwischenraum (L2), der dritte Zwischenraum (L3) und der vierte Zwischenraum (L4) einen Kommunikationskanal zwischen einander ausbilden.

7. Trennplatte (1) nach Anspruch 6, wobei die erste Auswölbung (a1) auf einer Seite des ersten Isolierabschnitts (11b) angeordnet ist, wobei die Seite in Breitenrichtung des ersten Körperabschnitts (A1) angeordnet ist; und wobei die erste Aussparung (b1) auf der anderen Seite angeordnet ist, die in Breitenrichtung des ersten Körperabschnitts (A1) angeordnet ist; und
wobei die zweite Auswölbung (a2) auf einer Seite des zweiten Isolierabschnitts (12b) angeordnet ist, wobei die Seite in Breitenrichtung des zweiten Körperabschnitts (A2) angeordnet ist; und wobei die zweite Aussparung (b2) auf der anderen Seite angeordnet ist, die in Breitenrichtung des zweiten Körperabschnitts (A2) angeordnet ist.

8. Trennplatte (1) nach Anspruch 6 oder 7, wobei der erste Verbindungsabschnitt (B1) ferner einen ersten Blockierabschnitt (11c) umfasst, der zwischen dem ersten Isolierabschnitt (11b) und einem der ersten Spleißabschnitte (11a) angeordnet ist;
wobei der zweite Verbindungsabschnitt (B2) ferner einen zweiten Blockierabschnitt (12c) umfasst, der zwischen dem zweiten Isolierabschnitt (12b) und einem der zweiten Spleißabschnitte (12a) angeordnet ist; und
wobei im ersten Montageteil (11) und im zweiten Montageteil (12), die nebeneinander angeordnet sind, der erste Blockierabschnitt (11c) mit dem zweiten Blockierabschnitt (12c) bündig ist.

9. Trennplatte (1) nach einem der Ansprüche 1 bis 8, wobei das erste Montageteil (11) oder das zweite Montageteil (12) dazu ausgelegt ist, mindestens zwei Batteriezellen (3) des Batteriemoduls (10) zu überlagern.

10. Batteriemodul (10), Folgendes umfassend:
einen Rahmen (2), der einen Aufnahmeraum enthält;
mindestens zwei Batteriezellen (3), die im Aufnahmeraum aufgenommen sind;
die Trennplatte (1) nach einem der Ansprüche 1 bis 9, wobei das erste Montageteil (11) und das zweite Montageteil (12) der Trennplatte (1) die Batteriezellen (3) jeweils überlagern und
eine Elektrodenverbindungsplatte (4), die auf der Trennplatte (1) angeordnet ist, wobei die mindestens zwei Batteriezellen (3) durch die Elektrodenverbindungsplatte (4) elektrisch verbunden sind.

11. Batteriepack (20), umfassend das Batteriemodul (10) nach Anspruch 10.

12. Vorrichtung, die ein Batteriemodul zur Stromversorgung verwendet, wobei das Batteriemodul das Batteriemodul (10) nach Anspruch 10 ist.

## Revendications

1. Plaque (1) de séparation pour un module (10) de batterie, la plaque (1) de séparation comportant :
un premier élément (11) d'assemblage, configuré pour recouvrir une cellule (3) de batterie du module (10) de batterie, le premier élément (11) d'assemblage comportant une première partie (A1) de corps et une première partie (B1) de liaison disposée autour de la première partie (A1) de corps ; et
un deuxième élément (12) d'assemblage, disposé à côté du premier élément (11) d'assemblage, et configuré pour recouvrir une autre cellule (3) de batterie du module (10) de batterie, le deuxième élément (12) d'assemblage comportant une deuxième partie (A2) de corps et une deuxième partie (B2) de liaison disposée autour de la deuxième partie (A2) de corps, le premier élément (11) d'assemblage et le deuxième élément (12) d'assemblage étant raccordés l'un à l'autre par une coordination entre la première partie (B1) de liaison et la deuxième partie (B2) de liaison ; et
une surface de la plaque (1) de séparation orientée à l'opposé de la cellule (3) de batterie étant munie d'un conduit servant à loger un organe (5) d'échantillonnage.

2. Plaque (1) de séparation selon la revendication 1, la première partie (B1) de liaison comportant deux premières parties (11a) de raccordement disposées l'une en face de l'autre dans un sens de la largeur de la première partie (A1) de corps, un premier renflement (a1) étant disposé sur l'une des premières parties (11a) de raccordement, et un premier évidement (B1) étant disposé sur l'autre des premières parties (11a) de raccordement ;
la deuxième partie (B2) de liaison comportant deux deuxièmes parties (12a) de raccordement disposées l'une en face de l'autre dans un sens de la largeur de la deuxième partie (A2) de corps, un deuxième renflement (a2) étant disposé sur l'une des deuxièmes parties (12a) de raccordement, et un deuxième évidement (b2) étant disposé sur l'autre des deuxièmes parties (12a) de raccordement :
et le premier renflement (a1) pouvant être inséré dans le deuxième évidement (b2), ou le deuxième renflement (a2) pouvant être inséré dans le premier évidement (B1), de telle sorte que le premier élément (11) d'assemblage et le deuxième élément (12) d'assemblage soient raccordés l'un à l'autre.

3. Plaque (1) de séparation selon la revendication 2, le premier renflement (a1) étant un cylindre s'étendant vers l'extérieur à partir de la première partie (11a) de raccordement dans le sens de la largeur de la première partie (A1) de corps, et le deuxième évidement (b2) étant un trou qui correspond au premier renflement (a1) ; et
le deuxième renflement (a2) étant un cylindre s'étendant vers l'extérieur à partir de la deuxième partie (12a) de raccordement dans le sens de la largeur de la deuxième partie (A2) de corps, et le premier évidement (B1) étant un trou qui correspond au deuxième renflement (a2).

4. Plaque (1) de séparation selon la revendication 2 ou 3, le premier évidement (B1) étant une encoche pratiquée dans le sens de l'épaisseur de la première partie (A1) de corps, et le deuxième renflement (a2) étant un ergot de blocage qui s'ajuste avec le premier évidement (B1) ; et
le deuxième évidement (b2) étant une encoche pratiquée dans le sens de l'épaisseur de la deuxième partie (A2) de corps, et le premier renflement (a1) étant un ergot de blocage qui s'ajuste avec le deuxième évidement (b2) .

5. Plaque (1) de séparation selon l'une quelconque des revendications 2 à 4, deux trous (112) de positionnement espacés étant disposés sur la première partie (A1) de corps et la deuxième partie (A2) de corps respectivement dans le sens de la longueur de la première partie de corps et de la deuxième partie de corps, et les deux trous (112) de positionnement étant configurés pour recevoir respectivement un montant d'électrode positive et un montant d'électrode négative de la cellule (3) de batterie.

6. Plaque (1) de séparation selon la revendication 5, la première partie (B1) de liaison comportant en outre une première partie (11b) d'isolation disposée autour de chaque trou (112) de positionnement, et les deux premières parties (11b) d'isolation étant réparties diagonalement par rapport à la première partie (A1) de corps :
la deuxième partie (B2) de liaison comportant outre une deuxième partie (12b) d'isolation disposée autour de chaque trou (112) de positionnement, et les deux deuxièmes parties (12b) d'isolation étant réparties diagonalement par rapport à la deuxième partie (A2) de corps ; et
dans le premier élément (11) d'assemblage et le deuxième élément (12) d'assemblage disposé à côté, un premier espacement (L1) et un deuxième espacement (L2) étant formés respectivement entre la première partie (11a) de raccordement et les deux premières parties (11b) d'isolation, un troisième espacement (L3) et un quatrième espacement (L4) étant formés respectivement entre la deuxième partie (12a) de raccordement et les deux deuxièmes parties (12b) d'isolation, et le premier espacement (L1), le deuxième espacement (L2), le troisième espacement (L3) et le quatrième espacement (L4) formant un canal communicant entre eux.

7. Plaque (1) de séparation selon la revendication 6, le premier renflement (a1) étant disposé d'un côté de la première partie (11b) d'isolation, le côté étant localisé dans le sens de la largeur de la première partie (A1) de corps :
et le premier évidement (B1) étant disposé de l'autre côté localisé dans le sens de la largeur de la première partie (A1) de corps ; et
le deuxième renflement (a2) étant disposé d'un côté de la deuxième partie (12b) d'isolation, le côté étant localisé dans le sens de la largeur de la deuxième partie (A2) de corps ; et
le deuxième évidement (b2) étant disposé de l'autre côté localisé dans le sens de la largeur de la deuxième partie (A2) de corps.

8. Plaque (1) de séparation selon la revendication 6 ou 7, la première partie (B1) de liaison comportant en outre une première partie (11c) de blocage disposée entre la première partie (11b) d'isolation et une des premières parties (11a) de raccordement ;
la deuxième partie (B2) de liaison comportant en outre une deuxième partie (12c) de blocage disposée entre la deuxième partie (12b) d'isolation et une des deuxièmes parties (12a) de raccordement ; et
dans le premier élément (11) d'assemblage et le deuxième élément (12) d'assemblage disposé à côté, la première partie (11c) de blocage affleurant la deuxième partie (12c) de blocage.

9. Plaque (1) de séparation selon l'une quelconque des revendications 1 à 8, le premier élément (11) d'assemblage ou le deuxième élément (12) d'assemblage étant configuré pour recouvrir au moins deux cellules (3) de batterie du module (10) de batterie.

10. Module (10) de batterie, comportant :
un cadre (2), contenant une cavité de réception :
au moins deux cellules (3) de batterie, logées dans la cavité de réception :
la plaque (1) de séparation selon l'une quelconque des revendications 1 à 9, le premier élément (11) d'assemblage et le deuxième élément (12) d'assemblage de la plaque (1) de séparation recouvrant respectivement les cellules (3) de batterie ; et
une plaque (4) de raccordement d'électrodes, disposée sur la plaque (1) de séparation, lesdites au moins deux cellules (3) de batterie étant reliées électriquement par l'intermédiaire de la plaque (4) de raccordement d'électrodes.

11. Bloc-batterie (20), comportant le module (10) de batterie selon la revendication 10.

12. Dispositif utilisant un module de batterie comme alimentation électrique, le module de batterie étant le module (10) de batterie selon la revendication 10.
